# EUROPEAN PATENT APPLICATION

(11) **EP 4 534 600 A1**
(43) Date of publication of application: **09.04.2025**
(21) Application number: 23811996.0
(22) Date of filing: 12.04.2023
(51) Int. Cl.: C08L 67/02, C08L 67/04, C08L 33/12, C08L 33/06

(54) **RESIN COMPOSITION AND MOLDED PRODUCT**

(30) Priority: 25.05.2022 KR 20220064184
(71) Applicant: LG Chem, Ltd., Yeongdeungpo-gu Seoul 07336 (KR)
(72) Inventor: PARK, Sung Eun, Daejeon 34122 (KR); YOO, Ki Hyun, Daejeon 34122 (KR); JANG, Se Young, Daejeon 34122 (KR); KIM, Yong Kyun, Daejeon 34122 (KR)
(74) Representative: Goddar, Heinz J.
(86) International application number: PCT/KR2023/004948
(87) International publication number: WO 2023/229219

(57) **Abstract**

The present invention relates to a biodegradable resin composition which has improved compatibility by using a chemical compatibilizer for improving the compatibility between heterogeneous biodegradable resins and thus has excellent mechanical properties, and also relates to a biodegradable molded article molded from the biodegradable resin composition.

## Description

### TECHNICAL FIELD

### [CROSS-REFERENCE TO RELATED APPLICATIONS]

This application claims priority from Korean Patent Application No. 10-2022-0064184, filed on May 25, 2022, the disclosure of which is incorporated by reference herein.

### [TECHNICAL FIELD]

The present invention relates to a resin composition and a biodegradable molded article molded therefrom.

### BACKGROUND ART

A thermoplastic resin has excellent mechanical characteristics and chemical characteristics, and thus is used in various fields such as drinking water containers, medical applications, food packaging, food containers, automobile molded articles, and agricultural vinyl.

Among them, since a polyethylene film and the like is excellent in mechanical properties and non-toxic to the human body, and can also be continuously deformed when subjected to heat, the polyethylene film is mainly used as hot sealing bags for food packaging, agricultural mulching films, or the like.

Hot sealing bags for food packaging are widely used in vacuum packaging of food and the like, and the polyethylene film capable of achieving excellent bonding strength even at a low sealing temperature is mainly used for the hot sealing bags for food packaging.

Agricultural mulching films are often used in a mulching farming method. A mulch is a material that covers a surface of the soil when growing crops. When a top surface of the soil is covered with various types of materials, weed growing can be blocked, pests can be prevented, and thus a use of pesticides can be reduced. In addition, it is possible to easily control the temperature of the soil, grow beneficial bacteria in the soil, prevent soil erosion, and retain a soil moisture. Examples of the mulching materials may include rice straws, leaves of crops such as grasses, or a polyolefin-based film, and generally a synthetic resin such as polyethylene films are mainly used.

However, a polyethylene film does not decompose in the natural environment, and also has a limitation in recycling. In particular, recently, a phenomenon in which plastics such as a waste polyethylene film are input into the ocean, and crush into very tiny microplastics due to return current and sunlight in the ocean, is an emerging issue. Over billions to tens of billions of such micro plastics in an uncountable amount are known to float in the oceans, are input into the bodies of sea creatures, accumulate in ecosystems, and influence the entire food chain.

Accordingly, in recent days, an interest in biodegradable plastics has been increased. Among the biodegradable plastics, polybutylene adipate terephthalate (hereinafter, referred as PBAT) and polylactic acid (hereinafter, referred as PLA) have been spotlighted as biodegradable plastics, and efforts continue to be made to improve the compatibility of PBAT and PLA in a biodegradable resin composition containing PBAT and PLA at the same time.

A compatibilizer for a biodegradable resin composition containing PBAT and PLA may be classified into a physical compatibilizer and a chemical compatibilizer according to operating principles. As a physical compatibilizer, a compatibilizer using a copolymer containing PBAT or PLA is representative. However, when using such a physical compatibilizer, there is a disadvantage in that mechanical properties are deteriorated since the physical compatibilizer serves a similar role to that of a plasticizer.

Meanwhile, Patent Registration No. 10-2045863 (Patent Document 1) discloses a biodegradable polyester film including an epoxy group and containing a copolymer in which styrene, acrylic acid ester and/or methacrylic acid ester are/is used as a base material. When the copolymer disclosed in Patent Document 1 is used as a compatibilizer of PBAT and PLA, use of a specific amount or more of the copolymer causes disadvantages that not only PBAT-g-PLA is formed at an interface between PBAT and PLA but also PBAT-g-PBAT and/or PLA-g-PLA are formed in a large amount in each resin, thus resulting in a rapid increase in the viscosity of the resin composition. Since it is difficult to control such a rapid increase in viscosity during processing of the resin composition, expansion of an application of the resin composition is limited. Therefore, it is important to secure a compatibilizer capable of securing processability by controlling the increase in viscosity within an appropriate range while maintaining the performance as a chemical compatibilizer in a biodegradable resin composition including heterogeneous biodegradable resins.

### PRIOR ART DOCUMENTS

### [Patent Document]

(Patent Document 1) KR 10-2045863 B1

### DISCLOSURE OF THE INVENTION

### TECHNICAL PROBLEM

The present invention has been made to solve the problems of the conventional art, and provides a biodegradable resin composition including heterogeneous biodegradable resins, wherein the compatibility is improved by using a chemical compatibilizer for improving the compatibility between the heterogeneous biodegradable resins, and thus mechanical properties are improved.

That is, an objective of the present invention is to provide a biodegradable resin composition including heterogeneous biodegradable resins, wherein the resin composition has an improved compatibility due to a chemical compatibilizer, and thus has improved mechanical properties.

In addition, another objective of the present invention is to provide a resin composition, wherein even if a compatibilizer is used in the same amount as the copolymer disclosed in Patent Document 1, a rapid increase in viscosity is suppressed and a compatibility is improved by adjusting a structure of an acryl-based copolymer, which is a compatibilizer for heterogeneous biodegradable resins, and thus a use of the resin composition can be expanded to various prescriptions and purposes.

In addition, another objective of the present invention is to provide a molded article which is molded from the resin composition and exhibits biodegradability.

### TECHNICAL SOLUTION

To solve the above-described limitations, the present invention provides a resin composition and a molded article.
(1) The present invention provides a resin composition including a first biodegradable resin, and a second biodegradable resin, and at least one among an acryl-based copolymer and a compatibilized part formed from the acryl-based copolymer, wherein the acryl-based copolymer includes a methyl (meth)acrylate monomer unit, a (meth)acrylate monomer unit containing an epoxy group, and an alkyl (meth)acrylate-based monomer unit having 2 to 10 carbon atoms, and the (meth)acrylate monomer unit containing an epoxy group is included in an amount of 15 wt% to 60 wt%.
(2) In (1) above of the present invention, there is provided the resin composition, wherein the first biodegradable resin includes an aliphatic polyester unit and an aromatic polyester unit.
(3) In (1) or (2) above of the present invention, there is provided the resin composition, wherein the first biodegradable resin includes polybutylene adipate terephthalate.
(4) In any one of (1) to (3) above of the present invention, there is provided the resin composition, wherein the second biodegradable resin includes polylactic acid.
(5) In any one of (1) to (4) above of the present invention, there is provided the resin composition, wherein the second biodegradable resin is included in an amount of 1 part by weight to 50 parts by weight with respect to 100 parts by weight of the first biodegradable resin.
(6) In any one of (1) to (5) above of the present invention, there is provided the resin composition, wherein at least one among the acryl-based copolymer and the compatibilized part formed from the acryl-based copolymer is included in an amount of 0.01 parts by weight to 10 parts by weight with respect to 100 parts by weight of the first biodegradable resin.
(7) In any one of (1) to (6) above of the present invention, there is provided the resin composition, wherein the acryl-based copolymer includes 25 wt% to 65 wt% of a methyl (meth)acrylate monomer unit, 15 wt% to 60 wt% of a (meth)acrylate monomer unit including an epoxy group, and 5 wt% to 30 wt% of an alkyl (meth)acrylate-based monomer unit having 2 to 10 carbon atoms.
(8) In any one of (1) to (7) above of the present invention, there is provided the resin composition, wherein an epoxy equivalent weight (E.E.W) of the acryl-based copolymer is 200 g/eq to 800 g/eq.
(9) In any one of (1) to (8) above of the present invention, there is provided the resin composition, wherein a weight average molecular weight of the acryl-based copolymer is 10,000 to 100,000.
(10) In any one of (1) to (9) above of the present invention, there is provided the resin composition, wherein a glass transition temperature of the acryl-based copolymer is 45 °C to 85 °C.
(11) In any one of (1) to (10) above of the present invention, there is provided the resin composition, wherein a weight average molecular weight of the entire resin composition is 100,000 to 200,000.
(12) In any one of (1) to (11) above of the present invention, there is provided the resin composition, wherein a melt flow ratio of the resin composition, as measured with a load of 5 kg at 190 °C according to ASTM D1238, is 3 g/10 min to 13.5 g/10 min.
(13) In any one of (1) to (12) above of the present invention, there is provided the resin composition, wherein a tensile strength of the resin composition, as measured according to ASTM D638, is 245 kgf/cm² to 500 kgf/cm².
(14) In any one of (1) to (13) above of the present invention, there is provided the resin composition, wherein an elongation of the resin composition, as measured according to ASTM D638, is 400% or more.
(15) In any one of (1) to (14) above of the present invention, there is provided the resin composition, wherein an average diameter of domains with respect to major diameters of the domains observed when the specimen of the resin composition is magnified using a transmission electron microscope at a magnification of 25,000 is 1 µm or less.
(16) The present invention provides a molded article molded from the resin composition in any one of (1) to (15).

### ADVANTAGEOUS EFFECTS

Are sin composition of the present invention is a biodegradable resin composition including heterogeneous biodegradable resins, and the resin composition has an improved compatibility due to a chemical compatibilizer, and thus has improved mechanical properties.

In addition, in a resin composition of the present invention, even if a compatibilizer is used in the same amount as the copolymer disclosed in Patent Document 1, a rapid increase in viscosity is suppressed and a compatibility is improved by adjusting a structure of an acryl-based copolymer, which is a compatibilizer for heterogeneous biodegradable resins, and thus a use of the resin composition can be expanded to various prescriptions and purposes.

In addition, a molded article molded from the resin composition of the present invention has improved mechanical properties and exhibits biodegradability.

### BRIEF DESCRIPTION OF THE DRAWINGS

FIG. 1 is an image which is obtained by image-capturing a surface of a specimen of a resin composition prepared according to Example 3 of the present invention and is enlarged at a magnification of 25,000 using a transmission electron microscope.
FIG. 2 is an image which is obtained by image-capturing a surface of a specimen of are sin composition prepared according to Comparative Example 1 of the present invention and is enlarged at a magnification of 25,000 using a transmission electron microscope.

### MODE FOR CARRYING OUT THE INVENTION

Hereinafter, the present invention will be described in more detail to help understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

As used herein, the term 'a monomer unit' may represent a component, a structure, or a material itself, derived from a monomer, and may mean, for specific example, a repeating unit formed in a polymer by participation of input monomers in a polymerization reaction.

As used herein, the term 'a composition' includes not only reaction products and decomposition products formed from materials of the corresponding composition, but also a mixture of materials including the corresponding composition.

The present invention provides a resin composition.

The resin composition may be a biodegradable resin composition including heterogeneous biodegradable resins. The resin composition may include, for specific example, a first biodegradable resin and a second biodegradable resin, and at least one among an acryl-based copolymer and a compatibilized part formed from the acryl-based copolymer, wherein the acryl-based copolymer may include a methyl (meth)acrylate monomer unit, a (meth)acrylate monomer unit containing an epoxy group, and an alkyl (meth)acrylate-based monomer unit having 2 to 10 carbon atoms, and the (meth)acrylate monomer unit containing an epoxy group is included in an amount of 15 wt% to 60 wt%.

The first biodegradable resin and the second biodegradable resin may be different in types from each other, any resin known as a biodegradable resin may be used. For specific example, the first degradable resin may be a polyester-based resin containing an aliphatic polyester unit and an aromatic polyester unit. For more specific example, the first biodegradable resin may include polybutylene adipate terephthalate (PBAT). PBAT is a random copolymer of an adipic acid, 1,4-butanediol and terephthalic acid, and is proposed as an alternative biodegradable resin to low-density polyethylene. Particularly, the PBAT may secure mechanical properties from an aromatic polyester unit formed by a terephthalic acid and 1,4-butanediol while securing biodegradability from an aliphatic polyester unit formed by adipic acid and 1,4-butanediol.

Any biodegradable resin different from the first degradable resin may be used as the second biodegradable resin, and the second biodegradable resin may include, for specific example, polylactic acid (PLA). PLA corresponds to an eco-friendly biodegradable resin produced from bio-materials and naturally decomposed into water and carbon dioxide within a few months by an action of microorganisms.

The resin composition may include the second biodegradable resin in an amount of 1 part by weight to 50 parts by weight with respect to 100 parts by weight of the first biodegradable resin. For specific example, the resin composition may include, with the respect to 100 parts by weight of the first biodegradable resin, the second biodegradable resin in an amount of 1 part by weight or more, 5 parts by weight or more, 10 parts by weight or more 15 parts by weight or more, 20 parts by weight or more, or 25 parts by weight or more, and in an amount of 50 parts be weight or less, 49 parts by weight or less, 48 parts by weight or less, 47 parts by weight or less, 46 parts by weight or less, 45 parts by weight or less, 44 parts by weight or less, or 43 parts by weight or less, and the mechanical properties and processibility may be more excellent within this range.

The resin composition may include at least one among the acryl-based copolymer and the computerized part formed from the acryl-based copolymer in an amount of 0.01 part by weight to 10 parts by weight with respect to 100 parts by weight of the first biodegradable resin. For specific example, the resin composition may include, with respect to 100 parts by weight of the first biodegradable resin, at least one among the acryl-based copolymer and the compatibilized part formed from the acryl-based copolymer in an amount of 0.01 part by weight or more, 0.05 parts by weight or more, 0.10 parts by weight or more, 0.11 parts by weight or more, 0.12 parts by weight or more, or 0.125 parts by weight or more, and in an amount of 10 parts by weight or less, 9 parts by weight or less, 8 parts by weight or less, 7 parts by weight or less, 6 parts by weight or less, 5 parts by weight or less, 4 parts by weight or less, 3 parts by weight or less, 2 parts by weight or less, 1 part by weight or less, 0.5 parts by weight or less, 0.4 parts by weight or less, 0.3 parts by weight or less, or 0.2 parts by weight or less.

The acryl-based copolymer may be a copolymer containing a reactive functional group such as an epoxy group, and may be included as a chemical compatibilizer for improving the compatibility of heterogeneous biodegradable resins in the resin composition. The acryl-based copolymer may exist as it is in the resin composition, may also exist in the form of a compatibilized part through a chemical bonding by the reaction of are active functional group with heterogeneous biodegradable resins, or the aforementioned two forms may coexist.

The acryl-based copolymer may be an acryl-based copolymer copolymerized by including a methyl (meth)acrylate monomer, a (meth)acrylate monomer containing an epoxy group, and an alkyl (meth) acrylate-based monomer having 2 to 10 carbon atoms. The acryl-based copolymer may be, for specific example, a random copolymer or a linear random copolymer, copolymerized by including a methyl (meth)acrylate monomer, a (meth)acrylate monomer containing an epoxy group, and an alkyl (meth)acrylate monomer having 2 to 10 carbon atoms. Herein, '(meth)acrylate ' is meant to include both acrylate and methacrylate.

The acryl-based copolymer may include a methyl (meth)acrylate monomer unit formed from a methyl (meth)acrylate monomer, in an amount of 25 wt% to 65 wt%. For specific example, the acryl-based copolymer may include a methyl(meth)acrylate monomer unit formed from a methyl (meth)acrylate monomer, in an amount of 25 wt% or more, 30 wt% or more, 35 wt% or more, or 40 wt% or more, and in an amount of 65 wt% or less, 60 wt% or less, 55 wt% or less, or 50 wt% or less. The acryl-based copolymer may have excellent miscibility with PLA and relatively good affinity with PBAT within this range, and thus the compatibility of PBAT and PLA may be further improved.

The acryl-based copolymer may include a (meth)acrylate monomer unit containing an epoxy group, formed from a (meth)acrylate monomer containing an epoxy group, in an amount of 15 wt% to 60 wt%. For specific example, The acryl-based copolymer may include the (meth)acrylate monomer unit containing an epoxy group, formed from the (meth)acrylate monomer containing an epoxy group, in an amount of 15 wt% or more, 20 wt% or more, 25 wt% or more, 30 wt% or more, 35 wt% or more, or 40 wt% or more, and in an amount of 60 wt% or less, 55 wt% or less, 50 wt% or less, or 45 wt% or less. Within this range, the flexibility of a polymer chain may increase, the compatibility between the heterogeneous biodegradable resins may be further improved, and particularly, when a film is prepared from the resin composition, chain diffusion and entanglement at an interface between films may increase.

The (meth) acylate monomer containing an epoxy group may be a (meth) acylate monomer containing a glycidyl group, and may be, for specific example, a glycidyl (meth)acrylate monomer. In the (meth)acrylate monomer containing an epoxy group, the epoxy group included in the monomer may react with a hydroxy group (-OH) or a carboxylic acid group (-COOH) included in PBAT or PLA, and thus a function as a chemical compatibilizer may be imparted. In addition, when the reaction occurs at the interface between PBAT and PLA, the compatibility and interfacial adhesion between PBAT and PLA may be further improved.

The acryl-based copolymer may include an alkyl (meth)acrylate-based monomer unit having 2 to 10 carbon atoms, formed from an alkyl (meth)acrylate-based monomer having 2 to 10 carbon atoms, in an amount of 5 wt% to 30 wt%. For specific example, the acryl-based copolymer may include an alkyl (meth)acrylate-based monomer unit having 2 to 10 carbon atoms, formed from the alkyl (meth)acrylate-based monomer having 2 to 10 carbon atoms, in an amount of 5 wt% or more, 10 wt% or more, or 15 wt% or more, and in an amount of 30 wt% or less, 25 wt% less, or 20 wt% or less. Within this range, the flexibility of a polymer chain may be increase, the compatibility between heterogeneous biodegradable resins may be further improved, and particularly, when a film is prepared from the resin composition, chain diffusion and entanglement at an interface between films may increase.

The alkyl (meth)acrylate-based monomer having 2 to 10 carbon atoms may be at least one selected from the group consisting of ethyl (meth)acrylate, n-propyl (meth)acrylate, iso-propyl (meth)acrylate, n-butyl (meth)acrylate, iso-butyl (meth)acrylate, t-butyl (meth)acrylate, pentyl (meth)acrylate, hexyl (meth)acrylate, heptyl (meth)acrylate, octyl (meth)acrylate, iso-octyl (meth)acrylate, 2-ethylhexyl (meth)acrylate, decyl (meth)acrylate, iso-decyl (meth)acrylate, dodecyl (meth)acrylate, iso-bornyl (meth)acrylate and lauryl (meth)acrylate. The alkyl (meth)acrylate-based monomer having 2 to 10 carbon atoms may be, for specific example, an alkyl (meth)acrylate-based monomer having 3 to 9 or 4 to 8 carbon atoms, and may be, for more specific example, at least one selected from the group consisting of butyl (meth)acrylate and 2-ethylhexyl (meth)acrylate.

The acryl-based copolymer may be prepared through emulsion polymerization of a polymerization composition including a polymerization initiator, an emulsifier, and a monomer mixture containing the methyl (meth)acrylate monomer, the (meth)acrylate monomer containing an epoxy group, and the alkyl (meth)acrylate monomer having 2 to 10 carbon atoms.

During the polymerization of the acryl-based copolymer, the polymerization may be performed at different polymerization temperatures for different polymerization times, as needed, and may be performed, for specific example, in the polymerization temperature range of 50 °C to 200 °C, for a polymerization time of 0.5 hours to 20 hours.

The polymerization initiator may be an inorganic or organic peroxide, and may be, for specific example, a watersoluble polymerization initiator including potassium persulfate, sodium persulfate, ammonium persulfate, and the like, and an oil-soluble polymerization initiator including cumene hydroperoxide, benzoyl peroxide, and the like.

An activator may be used together with the polymerization initiator to promote triggering of the reaction of the peroxide, and at least one selected from the group consisting of sodium formaldehyde sulfoxylate, sodium ethylenediaminetetraacetate, ferrous sulfate, and dextrose may be used as the activator.

The polymerization initiator may be added in an amount of 0.1 part by weight to 10 parts by weight, and may be added, for specific example, in an amount of 0.1 part by weight to 5 parts by weight, with respect to 100 parts by weight of the monomer mixture on the dry basis.

The polymerization may be performed by further including a chain transfer agent (or, a chain-transferring agent) for increasing an efficiency of the polymerization reaction. The chain transfer agent may serve to introduce homopolymers, which are polymers composed of only one type of monomers, into a micelle during a polymerization process. The chain transfer agent may be a linear or branched alkylthiol compound having 5 to 20 carbon atoms, and may be, for specific example, hexanethiol, cyclohexanethiol, adamantanethiol, heptanethiol, octanethiol, nonanethiol, decanethiol, undecanethiol, dodecanethiol, hexadecanethiol, octadecanethiol, etc. In addition, the chain transfer agent may be added, in terms of dry weight, in an amount of 0.1 part by weight to 10 parts by weight, and may be added, for specific example, in an amount of 0.1 part by weight to 5 parts by weight with respect to 100 parts by weight of the monomer mixture.

The emulsion polymerization may be performed by including steps(S10) to (S30).

(S10) step: preparing an emulsion by dispersing an emulsifier in a solvent.

(S20) step: preparing a pre-emulsion by mixing a monomer mixture containing monomer components and an emulsifier, etc.

(S30) step: mixing the emulsion prepared in the step (S10) and the pre-emulsion prepared in the step (S20) and performing an emulsion polymerization, in the presence of a polymerization initiator.

The emulsion polymerization for polymerizing the acryl-based copolymer may be performed according to the steps (S10) to (S30).

First, in step (S10), an emulsion including an emulsifier is prepared. This step is a separate step from apre-emulsion preparing process below. As the emulsifier, an anionic emulsifier may be used alone, or an anionic emulsifier, a cationic emulsifier, and a nonionic emulsifier may be used together, and an emulsion may be prepared by mixing the emulsifier component and a solvent such as water. In the preparing process of the emulsion, initial micelle particles of several nanometers in size may be stably formed. Step (S20) is a preparing step of a pre-emulsion including the monomer mixture, in which the pre-emulsion is prepared by mixing each above-mentioned monomer, an emulsifier, etc., with water. In this case, also, as an emulsifier, an anionic emulsifier may be used alone, or an anionic emulsifier, and a nonionic emulsifier may be used together. In this process, nano-sized latex particles may be formed in the pre-emulsion. That is, the above-mentioned emulsifier may be used in the emulsifier preparing step, and/or the pre-emulsion preparing step. In step (S30), after inputting a polymerization initiator into the emulsion thus prepared, the pre-emulsion and the polymerization initiator are continuously input for a predetermined time at equal proportions.

An amount of the polymerization initiator input into the emulsion may be greater than 0 part by weight and equal to or less than 1 part by weight with respect to 100 parts by weight of the monomer mixture, an amount of the polymerization initiator input together with the pre-emulsion may be 0.1 part by weight to 2 parts by weight with respect to 100 parts by weight of the monomer mixture, and the continuously input time may be about 3 hours to about 7 hours. Through this process, monomers or polymers suspended in the pre-emulsion may be input into the initial particles formed in the emulsion. Products of this reaction may then undergo a heat polymerization process in the presence of an additional polymerization initiator, and through this process, residual monomers are polymerized. In this case, 0.1 parts by weight to 10 parts by weight of the polymerization initiator with respect to 100 parts by weight of the monomer mixture may be further input, and the heat polymerization may be performed at a temperature of about 75 °C to about 85 °C for about 40 minutes to about 80 minutes. Such an emulsion polymerization method is dualized into an emulsion preparation process and a pre-emulsion preparation process, and may proceed later with a simple method of mixing the pre-emulsion with the emulsion, thereby improving the process stability and the productivity compared to conventional methods.

The emulsifier used in the emulsion polymerization may include at least one selected from the group consisting of an anionic emulsifier, a cationic emulsifier, and a nonionic emulsifier. The emulsifier is a material having both a hydrophilic group and a hydrophobic group, forms a micelle structure during emulsion polymerization, and allowing polymerization of each monomer to occur inside the micelle structure. An emulsifier commonly used in emulsion polymerization may be classified into an anionic emulsifier, a cationic emulsifier, and a nonionic emulsifier, and the like, and two or more types of emulsifiers may be mixed and used in terms of polymerization stability in the emulsion polymerization. For specific example, the nonionic emulsifier may include at least one selected from the group consisting of polyethylene oxide alkyl aryl ether, polyethylene oxide alkyl amine, and polyethylene oxide alkyl ester. In addition, the anionic emulsifier may include at least one selected from the group consisting of sodium alkyl diphenyl ether disulfonate, sodium polyoxyethylene alkyl ether sulfate, sodium polyoxyethylene aryl ether sulfate, sodium alkyl sulfate, sodium alkyl benzene sulfonate, and dialkyl sodium sulfosuccinate. These may be used alone or used as a mixture of two or more, and may be more effective when used as a mixture of an anionic emulsifier and a nonionic emulsifier. In addition, the emulsifier may be used in an amount of about 0.1 part by weight to about 10 parts by weight, or about 1 part by weight to about 5 parts by weight, with respect to 100 parts by weight of the total monomer components used in preparation of the latex particles.

The composition for polymerization may further include an aqueous solvent such as water in addition to the emulsifier or the monomer components. In this case, the aqueous solvent may be used, in terms of the stability and the viscosity control of the latex particles, in an amount of about 10 parts by weight to 1,000 parts by weight with respect to 100 parts by weight of the latex particles, and may be used such that the total solid content (TSC) is adjusted to about 10 wt% to about 60 wt% with respect to the total amount of the composition.

The acryl-based copolymer may have an epoxy equivalent weight (E.E.W) of 200 g/eq to 800 g/eq. For specific example, the epoxy equivalent weight (E.E.G) of the acryl-based copolymer may be 200 g/eq or more, 210 g/eq or more, 220 g/eq or more, 230 g/eq or more, 240 g/eq or more, 250 g/eq or more, 260 g/eq or more, 270 g/eq or more, 280 g/eq or more, 290 g/eq or more, 300 g/eq or more, 310 g/eq or more, 320 g/eq or more, 330 g/eq or more, 340 g/eq or more, or 350 g/eq or more, and may be 800 g/eq or less, 700 g/eq or less, 600 g/eq or less, 500 g/eq or less, 490 g/eq or less, 480 g/eq or less, 470 g/eq or less, 460 g/eq or less, 450 g/eq or less, 440 g/eq or less, 430 g/eq or less, 420 g/eq or less, 410 g/eq or less, 400 g/eq or less, 390 g/eq or less, 380 g/eq or less, 370 g/eq or less, or 360 g/eq or less. Within this range, the compatibility between heterogeneous biodegradable resins may be further improved. Particularly, when the biodegradable resin is a polyester-based resin, a reaction with a hydroxy group or a carboxylic acid group of the polyester-based resin is effectively carried out, and therefore the performance as a chemical compatibilizer may be further improved.

The acryl-based copolymer may have a weight average molecular weight of 10,000 to 100,000. For specific example, the acryl-based copolymer may have a weight average molecular weight of 10,000 or more, 15,000 or more, 20,000 or more, 25,000 or more, or 30,000 or more, and a weight average molecular weight of100,000 or less, 90,000 or less, 80,000 or less, 70,000 or less, 60,000 or less, 50,000 or less, or 40,000 or less. Within this range, an action as a chemical compatibilizer may be more excellent without compromising inherent properties of a heterogeneous biodegradable resin, particularly, a polyester-based resin. The weight average molecular weight may be expressed without a unit, but may be expressed in units of g/mol depending on the molar mass.

A glass transition temperature of the acryl-based copolymer may be 45 °C to 85 °C. For specific example, the glass transition temperature of the acryl-based copolymer may be45 °C or more, 46 °C or more, 47 °C or more, 48 °C or more, 49 °C or more, 50 °C or more, 51 °C or more, 52 °C or more, 53 °C or more, 54 °C or more, 55 °C or more, 56 °C or more, 57 °C or more, 58 °C or more, or 59 °C or more, and may be 85 °C or less, 84 °C or less, 83 °C or less, 82 °C or less, 81 °C or less, 80 °C or less, 79 °C r less, 78 °C or less, 77 °C or less, 76 °C or less, 75 °C or less, 74 °C or less, 73 °C or less, 72 °C or less, 71 °C or less, or 70 °C or less. Within this range, a resin composition containing a heterogeneous biodegradable resin may be more easily processed by a compatibilizer.

In the resin composition, a weight average molecular weight of the total resin composition may be 100,000 to 200,000. For specific example, the weight average molecular weight of the total resin composition may be 100,000 or more, 105,000 or more, 110,000 or more, 115,000 or more, 120,000 or more, 125,000 or more, or 130,000 or more, and may be 200,000 or less, 195,000 or less, 190,000 or less, 185,000 or less, 180,000 or less, 175,000 or less, 170,000 or less, 165,000 or less, 160,000 or less, or 155,000 or less. Within this range, the tensile properties of the resin composition may be further improved.

The resin composition may have a melt flow ratio of 3 g/10 min to 13.5 g/10 min, as measured at 190 °C with a load of 5 kg according to ASTM D1238. For specific example, the melt flow ratio, as measured at 190 °C with a load of 5 kg of the resin composition according to ASTM D1238 may be 3 g/10 min or more, 4 g/10 min or more, 5 g/10 min or more, 6 g/10 min or more, or 6.5 g/10 minor more, and may be 13.5 g/10 min or less, 13 g/10 min or less, 12.5 g/10 min or less, 12 g/10 min or less, 11.5 g/10 min or less, 11 g/10 min or less, 10.5 g/10 min or less, 10 g/10 min or less, 9.5 g/10 min or less, 9 g/10 min or less. Within this range, the processability may be further improved because the tensile strength of the resin composition is excellent and the viscosity is maintained at an appropriate level.

The resin composition may have the tensile strength of 245 kgf/cm² to 500 kgf/cm², as measured according to ASTM D638. For specific example, the tensile strength of the resin composition, as measured according to ASTM D638 may be 245 kgf/cm² or more, 250 kgf/cm² or more, 260 kgf/cm² or more, 270 kgf/cm² or more, 280 kgf/cm² or more, or 290 kgf/cm² or more, and may be 500 kgf/cm² or less, 490 kgf/cm² or less, 480 kgf/cm² or less, 470 kgf/cm² or less, 460 kgf/cm² or less, 450 kgf/cm² or less, 440 kgf/cm² or less, 430 kgf/cm²or less, 420 kgf/cm² or less, 410 kgf/cm² or less, 400 kgf/cm² or less, 390 kgf/cm² or less, or 380 kgf/cm² or less.

An elongation of the resin composition, as measured according to ASTM D638 may be 400 % or more. The elongation of the resin composition, as measured according to ASTM D638 may be, for specific example, 400 % or more, 410 % or more, 420 % or more, 430 % or more, 440 % or more, 450 % or more, 460 % or more, 470 % or more, 480 % or more, 490 % or more, 500 % or more, 510 % or more, 520 % or more, 530 % or more, 540 % or more, 550 % or more, 560 % or more, 570 % or more, 580 % or more, 590 % or more, or 600 % or more, and may be 700 % or less, 690 % or less, 680 % or less, 670 % or less, 660 % or less, or 650 % or less.

In the resin composition, an average diameter of domains with respect to major diameters of the domains observed when the specimen of the resin composition is magnified using a transmission electron microscope at a magnification of 25,000 may be 1 µm or less. For specific example, in the resin composition, the average diameter of domains with respect to major diameters of the domains observed when the specimen of the resin composition is magnified using a transmission electron microscope at a magnification of 25,000 may be 1 µm or less, 0.9 µm or less, 0.8 µm or less, 0.7 µm or less, 0.6 µm or less, or 0.5 µm or less, or may be 0.01 µm or more, 0.05 µm or more, 0.1 µm or more, 0.2 µm or more.

The present invention provides a molded article.

The molded article may be a biodegradable molded article molded from the resin composition, that is, a biodegradable resin composition. Herein, the molded article include a film molded article formed through film formation as well as an injection-molded article formed through injection, etc.

The molded article may be a biodegradable film, and may be, for specific example, a mulching film for agriculture or a film for using as a food packaging material.

Hereinafter, embodiments of the present invention will be described in detail so that those skilled in the art can easily carry out the present invention. However, the present invention may be embodied in many different forms and should not be construed as being limited to the embodiments set forth herein.

### Preparation Examples and Comparative Preparation Examples: preparation of acryl-based copolymer

### Preparation Example 1

200 parts by weight of distilled water and 0.5 parts by weight of sodium dioctyl sulfosuccinate (sodium bis(2-ethylhexyl) sulfosuccinate), as an emulsifier, with respect to 100 parts by weight of a total weight of methyl methacrylate, glycidyl methacrylate, butyl acrylate and 2-ethylhexyl acrylate, which are monomers, were added into a glass reactor of 3 L volume, equipped with a thermometer, a stirrer, a dropping funnel, a nitrogen inlet tube and a reflux cooler, and were stirred. During stirring, the inside of the reactor was substituted with a nitrogen gas, then the glass reactor was heated to 70 °C., 0.2 parts by weight of potassium persulfate was added and the resultant mixture was maintained for 30 minutes.

Additionally, 45 parts by weight of methyl methacrylate, 40 parts by weight of glycidyl methacrylate, and 15 parts by weight of butyl acrylate, which are monomers, were input into a beaker, and were mixed sufficiently for 30 minutes. To this mixture, 1-octanethiol as a chain transfer agent was added in an amount of 0.5 parts by weight with respect to 100 parts by weight of the total monomers, sufficiently mixed with a stirrer, and then the resultant mixture was continuously input at equal proportions into the glass reactor for 4 hours.

Thereafter, after 4 hours of the polymerization reaction time had elapsed, the internal temperature of the glass reactor was maintained at 70° C for 30 minutes, and then cooled to room temperature. The obtained emulsion polymerization product was coagulated using a calcium acetate aqueous solution, was subjected to a heat treatment the temperature of which was increased up to 85° C, then dehydrated, and dried at 60 °C for 16 hours, thereby obtaining an acryl-based copolymer.

### Preparation Example 2

An acryl-based copolymer was obtained in the same manner as in Preparation Example 1, except that 15 parts by weight of 2-ethylhexyl acrylate was input in place of 15 parts by weight of butyl acrylate in Preparation Example 1.

### Preparation Example 3

An acryl-based copolymer was obtained in the same manner as in Preparation Example 1, except that 55 parts by weight in place of 45 parts by weight of methyl methacrylate was input, and 30 parts by weight in place of 40 parts by weight of glycidyl methacrylate was input in Preparation Example 1.

### Preparation Example 4

An acryl-based copolymer was obtained in the same manner as in Preparation Example 1, except that 30 parts by weight in place of 45 parts by weight of methyl methacrylate was input, and 55 parts by weight in place of 40 parts by weight of glycidyl methacrylate was input in Preparation Example 1.

### Preparation Example 5

An acryl-based copolymer was obtained in the same manner as in Preparation Example 1, except that 30 parts by weight in place of 45 parts by weight of methyl methacrylate was input, 55 parts by weight in place of 40 parts by weight of glycidyl methacrylate was input, and 15 parts by weight of 2-ethylhexyl acrylate in place of 15 parts by weight of butyl acrylate was input in Preparation Example 1.

### Preparation Example 6

An acryl-based copolymer was obtained in the same manner as in Preparation Example 1, except that 55 parts by weight in place of 45 parts by weight of methyl methacrylate was input, 20 parts by weight in place of 40 parts by weight of glycidyl methacrylate was input, and 25 parts by weight of 2-ethylhexyl acrylate in place of 15 parts by weight of butyl acrylate was input in Preparation Example 1.

### Comparative Preparation Example 1

A commercially available copolymer (a copolymer of methyl methacrylate, butyl acrylate, glycidyl methacrylate and styrene) used in a preparation of masterbatch A described in Patent Document 1 was used.

### Comparative Preparation Example 2

An acryl-based copolymer was obtained in the same manner as in Preparation Example 1, except that 64 parts by weight in place of 45 parts by weight of methyl methacrylate was input, 2.1 parts by weight in place of 40 parts by weight of glycidyl methacrylate was input, and 33.9 parts by weight in place of 15 parts by weight of butyl acrylate was input in Preparation Example 1.

### Comparative Preparation Example 3

An acryl-based copolymer was obtained in the same manner as in Preparation Example 1, except that 62.3 parts by weight in place of 45 parts by weight of methyl methacrylate was input, 5.2 parts by weight in place of 40 parts by weight of glycidyl methacrylate was input, and 32.5 parts by weight of 2-ethylhexyl acrylate in place of 15 parts by weight of butyl acrylate was input in Preparation Example 1.

### Comparative Preparation Example 4

An acryl-based copolymer was obtained in the same manner as in Preparation Example 1, except that 60 parts by weight in place of 45 parts by weight of methyl methacrylate was input, 10 parts by weight in place of 40 parts by weight of glycidyl methacrylate was input, and 30 parts by weight in place of 15 parts by weight of butyl acrylate was input in Preparation Example 1.

### Comparative Preparation Example 5

An acryl-based copolymer was obtained in the same manner as in Preparation Example 1, except that 10 parts by weight in place of 45 parts by weight of methyl methacrylate was input, 64.8 parts by weight in place of 40 parts by weight of glycidyl methacrylate was input, and 25.2 parts by weight in place of 15 parts by weight of butyl acrylate was input in Preparation Example 1.

### Comparative Preparation Example 6

An acryl-based copolymer was obtained in the same manner as in Preparation Example 1, except that 10 parts by weight in place of 45 parts by weight of methyl methacrylate was input, 75 parts by weight in place of 40 parts by weight of glycidyl methacrylate was input, and 15 parts by weight of 2-ethylhexyl acrylate in place of 15 parts by weight of butyl acrylate was input in Preparation Example 1.

### Comparative Preparation Example 7

### <Preparation of acryl-based core latex>

80 parts by weight of distilled water, 0.2 parts by weight of sodium bicarbonate (NaHCO₃), 0.001 parts by weight of ferrous sulfate, and 0.18 parts by weight of disodium ethylenediaminetetraacetate with respect to 100 parts by total weight of methyl methacrylate, glycidyl methacrylate, and butyl acrylate, which are monomers input in a preparation of a core and a shell, were put into a glass reactor with 3 L volume, equipped with a thermometer, a stirrer, a dropping funnel, a nitrogen inlet tube and a reflux cooler, and was stirred. During stirring, an inside the reactor was substituted with a nitrogen gas, and then an internal temperature of the glass reactor was raised to 50 °C and maintained.

Separated from this, to prepare a monomer pre-emulsion, 50 parts by weight of distilled water, 0.6 parts by weight of sodium lauryl sulfonate, and 85 parts by weight of butyl acrylate were put to prepare a monomer pre-emulsion.

In a state where an internal temperature of the reactor is maintained at 50 °C, the prepared monomer pre-emulsion was continuously input for 5 hours, and 0.2 parts by weight of t-butyl hydroperoxide and 0.2 parts by weight of sodium formaldehyde sulfoxylate, which are initiators, were simultaneously added to initiate the reaction. 30 minutes after the addition of the monomer pre-emulsion was completed, 0.01 part by weight of t-butyl hydroperoxide and 0.02 part by weight of sodium formaldehyde sulfoxylate were additionally added and aged for 1 hour to prepare an acryl-based core latex containing an acryl-based core polymer. In this case, the polymerization conversion rate was 99%, and the total content of a solid powder was 40% by weight.

### <Preparation of graft copolymer latex>

While maintaining a temperature of the reactor at 70 °C, 10 parts by weight of distilled water, 0.1 part by weight of sodium lauryl sulfonate, with respect to 100 parts by total weight of methyl methacrylate, glycidyl methacrylate, butyl acrylate, which are monomers input in a preparation of a core and a shell, were input into the reactor and was stirred. During stirring, an inside the reactor was substituted with a nitrogen gas.

Separated from this, 13 parts by weight of methyl methacrylate, 2 parts by weight of glycidyl methacrylate, and 0.2 parts by weight of 1-octanediol as a chain transfer agent were input into a beaker, and thoroughly stirred with a stirrer to prepare a graft monomer mixture.

The prepared graft monomer mixture was continuously input into the reactor for 1 hour, and the graft polymerization was performed to prepare a graft copolymer latex containing a graft copolymer in a core-shell form. In this case, a polymerization conversion rate was 99%, and a total content of a solid powder was 42% by weight.

### Comparative Preparation Example 8

The acryl-based core latex was obtained in the same manner as in Comparative Preparation Example 7 except that 80 parts by weight of 2-ethylhexyl acrylate was added in place of 85 parts by weight of butyl acrylate, and the graft copolymer in a core-shell form was obtained in the same matter as in Comparative Preparation Example 7 except that 18 parts by weight in place of 13 parts by weight of methyl methacrylate was added in Comparative Preparation Example 7.

### Comparative Preparation Example 9

The acryl-based core latex was obtained in the same manner as in Comparative Preparation Example 7 except that 80 parts by weight in place of 85 parts by weight of butyl acrylate was added, and the graft copolymer in a core-shell form was obtained in the same matter as in Comparative Preparation Example 7, except that 15 parts by weight in place of 13 parts by weight of methyl methacrylate, and 5 parts by weight in place of 2 parts by weight of glycidyl methacrylate were added in Comparative Preparation Example 7.

### Comparative Preparation Example 10

The acryl-based core latex was obtained in the same manner as in Comparative Preparation Example 7 except that 80 parts by weight of 2-ethylhexyl arylate was added in place of 85 parts by weight of butyl acrylate, and the graft copolymer in a core-shell form was obtained in the same matter as in Comparative Preparation Example 7, except that 15 parts by weight in place of 13 parts by weight of methyl methacrylate, and 5 parts by weight in place of 2 parts by weight of glycidyl methacrylate were added in Comparative Preparation Example 7.

### Examples and Comparative Examples: preparation of resin composition

### Example 1

Polybutylene adipate terephthalate (manufacturer: Xinjiang Blueridge Tunhe Chemical Industry, product name: TH801T) and polylactic acid (manufacturer: Natureworks, product name: Ingeo Biopolymer 2003D) were each dried at 60 ° C for 24 hours using an oven.

Then, 80 parts by weight of polybutylene adipate terephthalate, 20 parts by weight of a polylactic acid, and 0.1 part by weight of the acryl-based copolymer obtained according to Preparation Example 1 were mixed, and was blended at 180 °C for 8 minutes at 60 rpm using a Haake Rheomix OS Lab mixer made by Thermo Electron Karlsruhe GmbH. Thereafter, a resin composition was obtained by grinding the resultant mixture.

### Example 2

A resin composition was obtained in the same manner as in Example 1, except that 0.3 parts by weight of the acryl-based copolymer obtained according to Preparation Example 1 was input, which differs from Example 1 in which 0.1 parts by weight of the acryl-based copolymer was input.

### Example 3

A resin composition was obtained in the same manner as in Example 1, except that 1 part by weight of the acryl-based copolymer obtained according to Preparation Example 1 was input, which differs from Example 1 in which 0.1 parts by weight of the acryl-based copolymer was input.

### Example 4

A resin composition was obtained in the same manner as in Example 1, except that 1 part by weight of the acryl-based copolymer obtained according to Preparation Example 2 was input, which differs from Example 1 in which 0.1 parts by weight of the acryl-based copolymer was input.

### Example 5

A resin composition was obtained in the same manner as in Example 1, except that 1 part by weight of the acryl-based copolymer obtained according to Preparation Example 3 was input, which differs from Example 1 in which 0.1 parts by weight of the acryl-based copolymer was input.

### Example 6

A resin composition was obtained in the same manner as in Example 1, except that 1 part by weight of the acryl-based copolymer obtained according to Preparation Example 4 was input, which differs from Example 1 in which 0.1 parts by weight of the acryl-based copolymer was input.

### Example 7

A resin composition was obtained in the same manner as in Example 1, except that 1 part by weight of the acryl-based copolymer obtained according to Preparation Example 5 was input, which differs from Example 1 in which 0.1 parts by weight of the acryl-based copolymer was input.

### Example 8

A resin composition was obtained in the same manner as in Example 1, except that 1 part by weight of the acryl-based copolymer obtained according to Preparation Example 6 was input, which differs from Example 1 in which 0.1 parts by weight of the acryl-based copolymer was input.

### Comparative Example 1

A resin composition was obtained in the same manner as in Example 1, except that the acryl-based copolymer obtained according to Preparation Example 1 was not input, which differs from Example 1

### Comparative Example 2

A resin composition was obtained in the same manner as in Example 1, except that 1 part by weight of the acryl-based copolymer according to Comparative Preparation Example 1 was input, which differs from Example 1 in which 0.1 parts by weight of the acryl-based copolymer obtained Preparation Example 1 was input.

### Comparative Example 3

A resin composition was obtained in the same manner as in Example 1, except that 1 part by weight of the acryl-based copolymer obtained according to Comparative Preparation Example 2 was input, which differs from Example 1 in which 0.1 parts by weight of the acryl-based copolymer obtained Preparation Example 1 was input.

### Comparative Example 4

A resin composition was obtained in the same manner as in Example 1, except that 1 part by weight of the acryl-based copolymer obtained according to Comparative Preparation Example 3 was input, which differs from Example 1 in which 0.1 parts by weight of the acryl-based copolymer obtained Preparation Example 1 was input.

### Comparative Example 5

A resin composition was obtained in the same manner as in Example 1, except that 1 part by weight of the acryl-based copolymer obtained according to Comparative Preparation Example 4 was input, which differs from Example 1 in which 0.1 parts by weight of the acryl-based copolymer obtained Preparation Example 1 was input.

### Comparative Example 6

A resin composition was obtained in the same manner as in Example 1, except that 1 part by weight of the acryl-based copolymer obtained according to Comparative Preparation Example 5 was input, which differs from Example 1 in which 0.1 parts by weight of the acryl-based copolymer obtained Preparation Example 1 was input.

### Comparative Example 7

A resin composition was obtained in the same manner as in Example 1, except that 1 part by weight of the acryl-based copolymer obtained according to Comparative Preparation Example 6 was input, which differs from Example 1 in which 0.1 parts by weight of the acryl-based copolymer obtained Preparation Example 1 was input.

### Comparative Example 8

A resin composition was obtained in the same manner as in Example 1, except that 1 part by weight of the acryl-based copolymer obtained according to Comparative Preparation Example 7 was input, which differs from Example 1 in which 0.1 parts by weight of the acryl-based copolymer obtained Preparation Example 1 was input.

### Comparative Example 9

A resin composition was obtained in the same manner as in Example 1, except that 1 part by weight of the acryl-based copolymer obtained according to Comparative Preparation Example 8 was input, which differs from Example 1 in which 0.1 parts by weight of the acryl-based copolymer obtained Preparation Example 1 was input.

### Comparative Example 10

A resin composition was obtained in the same manner as in Example 1, except that 1 part by weight of the acryl-based copolymer obtained according to Comparative Preparation Example 9 was input, which differs from Example 1 in which 0.1 parts by weight of the acryl-based copolymer obtained Preparation Example 1 was input.

### Comparative Example 11

A resin composition was obtained in the same manner as in Example 1, except that 1 part by weight of the acryl-based copolymer obtained according to Comparative Preparation Example 10 was input, which differs from Example 1 in which 0.1 parts by weight of the acryl-based copolymer obtained Preparation Example 1 was input.

### Experimental Examples

### Experimental Example 1

The glass transition temperature, the molecular weight, and the epoxy equivalent weight of each of the acryl-based copolymers prepared according to Preparation Examples 1 to 6 and Comparative Preparation Examples 2 to 10, were measured by following methods, and the measurement results are listed in Table 1 below along with a structure of the copolymer and a monomer composition.

In addition, the glass transition temperature, the molecular weight, and the epoxy equivalent weight of the copolymer according to Comparative Preparation Example 1 were measured, and the measurement results are listed in Table 1 below.

Glass transition temperature (°C) : the glass transition temperature was measured with a differential scanning calorimeter (manufacturer: TA Instruments, model name: DSC 250), by: inputting 8 mg (error range 1 mg) of a sample of each of the acryl-based copolymers prepared according to Preparation Examples and Comparative Preparation Examples; primarily heating up to 300 °C under a nitrogen stream at a temperature increase rate of 10 °C/min; cooling to 0 °C at a temperature decrease rate of 10 °C/min; and secondarily heating up to 300 °C at a temperature increase rate of 10 °C/min.

Weight average molecular weight and number average molecular weight: the weight average molecular weight and the number average molecular weight of the obtained acryl-based copolymer sample were measured for under following conditions using gel permeation chromatography (GPC, PL GPC220, made by Agilent Technologies Co., Ltd.). In this case, a part of a solution dissolved in the solvent, tetrahydrofuran (Stabilized with BHT) at a concentration of 2 mg/ml, was taken and used as a sample.
- Column: PL MiniMixed B X 2
- Solvent: Tetrahydrofuran (Stabilized with BHT)
- Flow rate: 0.3 ml/min
- Concentration of sample: 2.0 mg/ml
- Column temperature: 40 °C
- Detector: Waters 2414 Refractive Index Detector
- Data processing: Empower
- Calibration curve: using polystyrene standards (nine types of molecular weights: 2,000 / 10,000 / 30,000 / 70,000 / 200,000 / 700,000 / 2,000,000 / 4,000,000 / 10,000,000)

Epoxy equivalent weight (g/eq): An amount ratio (molar ratio) of glycidyl methacrylate was measured using 700 MHz NMR spectrometer made by Bruker Co.,Ltd. according to the nuclear magnetic resonance spectroscopy, an equivalent number(eq/mol) of an epoxy group was obtained from the measured values, and an epoxy equivalent weight (g/eq) was calculated by using the number average molecular weight (Mn) measured above.

**Table 1**

| Classificat ion | Copo lyme r stru ctur e | Monomer composition | | | | Glass trans ition tempe ratur e | Weight averag e molecu lar weight | Epoxy equiv alent weigh t⁹⁾ |
|---|---|---|---|---|---|---|---|---|
| | | MMA¹⁾ | GMA²⁾ | BA³⁾ | 2-EHA⁴⁾ | | | |
| | | (wt%) | | | | (°C) | (g/mol ) | (g/eq ) |
| Preparation Example 1 | line ar | 45.0 | 40.0 | 15.0 | - | 65 | 33,000 | 355 |
| Preparation Example 2 | line ar | 45.0 | 40.0 | - | 15.0 | 57 | 33,000 | 355 |
| Preparation Example 3 | line ar | 55.0 | 30.0 | 15.0 | - | 68 | 33,000 | 471 |
| Preparation Example 4 | line ar | 30.0 | 55.0 | 15.0 | - | 57 | 33,000 | 258 |
| Preparation Example 5 | line ar | 30.0 | 55.0 | - | 15.0 | 52 | 33,000 | 259 |
| Preparation Example 6 | line ar | 55.0 | 20.0 | - | 25.0 | 47 | 30,000 | 708 |
| Comparative Preparation Example 1 | line ar | - | | | | 54 | 6,800 | 285 |
| Comparative Preparation Example 2 | line ar | 64.0 | 2.1 | 33.9 | - | 35 | 30,000 | 6,796 |
| Comparative Preparation Example 3 | line ar | 62.3 | 5.2 | - | 32.5 | 34 | 30,000 | 2,712 |
| Comparative Preparation Example 4 | line ar | 60.0 | 10.0 | 30.0 | - | 39 | 28,000 | 1,414 |
| Comparative Preparation Example 5 | line ar | 10.0 | 64.8 | 25.2 | - | 35 | 38,000 | 219 |
| Comparative Preparation Example 6 | line ar | 10.0 | 75.0 | - | 15.0 | 63 | 40,000 | 190 |
| Comparative Preparation Example 7⁵⁾ | core shel l | 13.0 | 2.0 | 85.0 | - | -55 / 95 | 10,000 | - |
| Comparative Preparation Example 8⁶⁾ | core shel l | 18.0 | 2.0 | - | 80.0 | -70 / 98 | 13,000 | - |
| Comparative Preparation Example 9⁷⁾ | core shel l | 15.0 | 5.0 | 80.0 | - | -55 / 93 | 13,000 | - |
| Comparative Preparation Example 10⁸⁾ | core - shel l | 15.0 | 5.0 | - | 80.0 | -70 / 93 | 13,000 | - |
| 1) MMA: methyl methacrylate | | | | | | | | |
| 2) GMA: glycidyl methacrylate | | | | | | | | |
| 3) BA: butyl acrylate | | | | | | | | |
| 4) 2-EHA: 2-ethylhexyl acrylate | | | | | | | | |
| 5) Comparative Preparation Example 6: core (BA) glass transition temperature -55 °C / shell (MMA, GMA) glass transition temperature 95 °C/Mw = Mw of shell | | | | | | | | |
| 6) Comparative Preparation Example 7: core (2-EHA) glass transition temperature -70 °C / shell (MMA, GMA) glass transition temperature 98 °C/Mw = Mw of shell | | | | | | | | |
| 7) Comparative Preparation Example 8: core(BA) glass transition temperature -55 °C/shell (MMA, GMA) glass transition temperature 93 °C/Mw = Mw of shell | | | | | | | | |
| 8) Comparative Preparation Example 9: core (2-EHA) glass transition temperature -70 °C / shell (MMA, GMA) glass transition temperature 93 °C/Mw = Mw of shell | | | | | | | | |
| 9) Total epoxy equivalent weight of a core-shell acryl-based copolymer is not measurable | | | | | | | | |

### Experimental Example 2

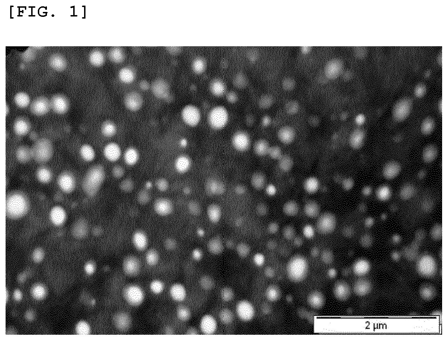

The resin compositions prepared according to Example 1 and Comparative Example 1 were each put into a mold with130 mm x 130 mm x 2 mm in size, preheated at 180 °C for about 5 minutes, then compression processed under a compressive load condition of 20 MPa for 3 minutes, and then quenched at room temperature to prepare specimens. Subsequently, the cross sections of the specimens were microtomed and enlarged at a magnification of 25,000 using a transmission electron microscope, and respectively shown in FIGS 1 (Example 3) and 2 (Comparative Example 1).

As shown in FIG 1, in Example 3, the domains of polylactic acid (bright area) are separately present in polybutylene adipate terephthalate (dark area). It can be confirmed that even the largest domain had a domain size with respect to the major axis of the domain of less than about 0.5 µm, and thus the domains of polylactic acid were formed in a very small size.

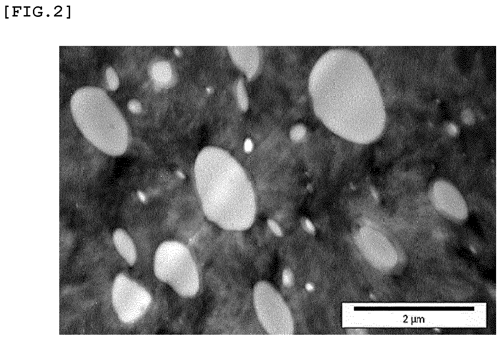

On the other hand, as shown FIG. 2, in Comparative Example 1 in which no compatibilizer was additionally input, the domains of polylactic acid (bright area) are separately present in polybutylene adipate terephthalate (dark area). It can be confirmed that the domain size with respect to the major axis of the domain ranges from about 0.5 µm to about 1.5 µm, and the domains of polylactic acid were formed in a large size.

In FIGS. 1 and 2, the average diameter of the domains with respect to the major axis of the domain was analyzed using the Analyze tool of the ImageJ software. As a result, it was confirmed that the average diameter of the polylactic acid domains with respect to the major axis of the domain in Example 3 was about 0.3 µm, and the average diameter of the polylactic acid domains with respect to the major axis of the domain in Comparative Example 1 was about 1.2 µm.

From these results, it was confirmed that the resin compositions prepared according to Examples of the present invention have improved compatibility between polylactic acid and polybutylene adipate terephthalate due to the acryl-based copolymer, and thus polylactic acid is finely and evenly dispersed.

### Experimental Example 3

The molecular weight and the molecular weight distribution, the tensile strength, the elongation and the melt flow ratio of the resin compositions prepared according to Examples 1 to 8 and Comparative Examples 1 to 11, were measured in the following manner, and the results are listed in Table 2 below.

Weight average molecular weight, number average molecular weight, molecular weight distribution and molecular weight increase rate: the weight average molecular weight and the number average molecular weight of the obtained resin composition samples were measured under following conditions using gel permeation chromatography (GPC, PL GPC220, made by Agilent Technologies Co., Ltd.). In this case, a part of a solution obtained by dissolving in a solvent, which is chloroform, at a concentration of 1 mg/ml, was taken and used as a sample.
- Column: PL Mini Mixed B X 2
- Solvent: Chloroform
- Flow rate: 1.0 ml/min
- Concentration of sample: 1.0 mg/ml
- Column temperature: 40 °C
- Detector: Waters 2414 Refractive Index Detector
- Data processing: Empower
- Calibration curve: using polystyrene standards (nine types of molecular weights: 2,000 / 10,000 / 30,000 / 70,000 / 200,000 / 700,000 / 2,000,000 / 4,000,000 / 10,000,000)

In addition, the increase rate of the weight average molecular weights measured for the resin compositions according to Examples 1 to 8 and Comparative Examples 2 to 11 with respect to the weight average molecular weight measured for the resin composition according to Comparative Example 1, in which no acryl-based copolymer was input, was calculated according to Equation 1 below, and the calculated results were listed. Molecular weight increase rate = (weight average molecular weights measured for the resin compositions according to Examples 1 to 8 and Comparative Examples 2 to 11/weight average molecular weight measured for the resin composition according to Comparative Example 1) X 100

Tensile strength and elongation: the obtained resin compositions were each put into a mold having a size of 130 mm X 130 mm X 2 mm, preheated at 180 °C for about 5 minutes, then compression processed under a compressive load condition of 20 MPa for 3 minutes, and then quenched at room temperature to prepare specimens. The prepared specimens were prepared as test specimens according to ASTM D638, and Type 4 standard, and the elongation and the tensile strength were measured with a universal physical property tester (Instron 3365) made by Instron Co., Ltd. under the condition of 50 mm/min according to the ASTM D638 standards.

Melt flow ratio (g/10 min): the melt flow ratio of the obtained resin composition sample was measured according to ASTM D1238 (190 °C, 5 kg)using MI-4 made by Gottfert Co., Ltd.

**Table 2**

| Classific ation | Weight average molecular weight | Molecular weight increase rate | Melt flow ratio | Tensile strength | Elongation |
|---|---|---|---|---|---|
| | (g/mol) | (Index) | (g/10 min) | (kgf/cm² ) | (%) |
| Example 1 | 135,000 | 100 | 13.0 | 295 | 675 |
| Example 2 | 141,000 | 104 | 11.3 | 334 | 675 |
| Example 3 | 150,000 | 111 | 6.9 | 392 | 670 |
| Example 4 | 152,000 | 113 | 6.7 | 385 | 670 |
| Example 5 | 145,000 | 107 | 7.6 | 360 | 670 |
| Example 6 | 159,000 | 118 | 5.0 | 400 | 665 |
| Example 7 | 159,000 | 118 | 4.8 | 410 | 665 |
| Example 8 | 141,000 | 104 | 10.6 | 300 | 665 |
| Comparati ve Example 1 | 135,000 | 100 | 14.3 | 230 | 670 |
| Comparati ve Example 2 | 175,000 | 130 | 0.0 | 393 | 590 |
| Comparati ve Example 3 | 135,000 | 100 | 14.3 | 233 | 670 |
| Comparati ve Example 4 | 135,000 | 100 | 14.3 | 233 | 670 |
| Comparati ve Example 5 | 138,000 | 102 | 14.0 | 243 | 670 |
| Comparati ve Example 6 | 162,000 | 120 | 2.0 | 420 | 560 |
| Comparati ve Example 7 | 175,000 | 128 | 1.0 | 439 | 500 |
| Comparati ve Example 8 | 135,000 | 100 | 14.7 | 197 | 590 |
| Comparati ve Example 9 | 135,000 | 100 | 14.5 | 195 | 640 |
| Comparati ve Example 10 | 135,000 | 100 | 13.9 | 200 | 645 |
| Comparati ve Example 11 | 138,000 | 102 | 13.8 | 210 | 645 |

As shown in Table 2 above, it can be confirmed that the resin composition according to Comparative Example 2 containing the copolymer disclosed in Patent Document 1 as a compatibilizer has a significantly increased weight average molecular weight, compared to the resin composition prepared according to Comparative Example 1 containing no compatibilizer, and thus exhibited increased tensile strength, but due to a rapid rise of the viscosity, the melt flow ratio was so low that it does not appear, and the elongation was rather reduced.

Meanwhile, it can be confirmed that compared to the resin composition prepared according to Comparative Example 1 containing no compatibilizer, the resin compositions prepared according to Examples 1 to 8 containing an acryl-based copolymer defined in the present invention has increased tensile strength while maintaining the elongation to be equal or greater that the elongation of the resin composition prepared according to Comparative Example 1.Particularly, it can be confirmed that the resin compositions prepared according to Examples 1 to 8 have a higher melt flow ratio and thus exhibit excellent processibility compared to the resin composition according to Comparative Example 2 containing a compatibilizer in the same amount.

Meanwhile, it can be confirmed that in the resin composition, prepared according to Comparative Examples 3 to 5, using an acryl-based copolymer including low amount of the (meth)acrylate monomer unit including an epoxy group and including excessive amounts of methyl (meth)acrylate monomer units and alkyl (meth)acrylate-based monomer units having 2 to 10 carbon atoms, prepared according to Comparative Preparation Examples 2 to 4, as a compatibilizer, there were extremely insignificant changes in the processibility due to the melt flow ratio and the tensile characteristics even though the ad dition of the compatibilizer was increased.

In addition, it can be confirmed that in the resin composition, prepared according to Comparative Examples 6 and 7, using the acryl-based copolymer including a large amount of (meth)acrylate monomer units containing an epoxy group and including a small amount of methyl (meth) acrylate monomer units, prepared according to Comparative Preparation Examples 5 and 6, as a compatibilizer, the epoxy equivalent weight in the acryl-based copolymer rapidly increased due to an increase in the amount of the (meth)acrylate monomer units containing an epoxy group, thus the interfacial adhesion between PLA and PBAT became too high, and therefore the elongation was lowered significantly.

In addition, it can be confirmed that in the resin composition prepared according to Comparative Examples 8 to 11 using the acryl-based copolymer in a core-shell form, prepared according to Comparative Preparation Examples 7 to 10, as a compatibilizer, the compatibility between PLA and PBAT was rather hindered, and thus the tensile properties became poorer.

With respect to these results, it can be seen the resin composition of the present invention uses a chemical compatibilizer to improve the compatibility between heterogeneous biodegradable resins, and thus the compatibility is improved, leading to excellent mechanical properties.

## Claims

1. A resin composition comprising:
a first biodegradable resin, and a second biodegradable resin; and
at least one among an acryl-based copolymer and a compatibilized part formed from the acryl-based copolymer,
wherein the acryl-based copolymer includes a methyl (meth)acrylate monomer unit, a (meth)acrylate monomer unit containing an epoxy group, and an alkyl (meth)acrylate-based monomer unit having 2 to 10 carbon atoms, and the (meth)acrylate monomer unit containing an epoxy group is included in an amount of 15 wt% to 60 wt%.

2. The resin composition of claim 1, wherein the first biodegradable resin comprises an aliphatic polyester unit and an aromatic polyester unit.

3. The resin composition of claim 1, wherein the first biodegradable resin comprises polybutylene adipate terephthalate.

4. The resin composition of claim 1, wherein the second biodegradable resin comprises polylactic acid.

5. The resin composition of claim 1, wherein the second biodegradable resin is included in an amount of 1 part by weight to 50 parts by weight with respect to 100 parts by weight of the first biodegradable resin.

6. The resin composition of claim 1, wherein at least one among the acryl-based copolymer and the compatibilized part formed from the acryl-based copolymer is included in an amount of 0.01 parts by weight to 10 parts by weight with respect to the 100 parts by weight of the first biodegradable resin.

7. The resin composition of claim 1, wherein the acryl-based copolymer includes 25 wt% to 65 wt% of a methyl (meth)acrylate monomer unit, 15 wt% to 60 wt% of a (meth)acrylate monomer unit including an epoxy group, and 5 wt% to 30 wt% of an alkyl (meth)acrylate-based monomer unit having 2 to 10 carbon atoms.

8. The resin composition of claim 1, wherein an epoxy equivalent weight (E.E.W) of the acryl-based copolymer is 200 g/eq to 800 g/eq.

9. The resin composition of claim 1, wherein a weight average molecular weight of the acryl-based copolymer is 10,000 to 100,000.

10. The resin composition of claim 1, wherein a glass transition temperature of the acryl-based copolymer is 45 °C to 85 °C.

11. The resin composition of claim 1, wherein a weight average molecular weight of the entire resin composition is 100,000 to 200,000.

12. The resin composition of claim 1, wherein a melt flow ratio of the resin composition, as measured with a load of 5 kg at 190 °C according to ASTM D1238, is 3 g/10 min to 13.5 g/10 min.

13. The resin composition of claim 1, wherein a tensile strength of the resin composition, as measured according to ASTM D638, is 245 kgf/cm² to 500 kgf/cm².

14. The resin composition of claim 1, wherein an elongation of the resin composition, as measured according to ASTM D638, is 400% or more.

15. The resin composition of claim 1, wherein an average diameter of domains with respect to major diameters of the domains observed when the specimen of the resin composition is magnified using a transmission electron microscope at a magnification of 25,000 is 1 um or less.

16. A molded article molded from the resin composition according to any one of claims 1 to 15.
